# EUROPEAN PATENT APPLICATION

(11) **EP 4 435 584 A1**
(43) Date of publication of application: **25.09.2024**
(21) Application number: 24163386.6
(22) Date of filing: 13.03.2024
(51) Int. Cl.: G06F 3/12, H04W 48/20, H04W 76/00

(54) **CONTROL METHOD, INFORMATION PROCESSING APPARATUS, AND COMPUTER PROGRAM**

(30) Priority: 24.03.2023 JP 2023048616
(71) Applicant: CANON KABUSHIKI KAISHA, Tokyo 146-8501 (JP)
(72) Inventor: YAMAZAKI, Shinya, Tokyo, 146-8501 (JP)
(74) Representative: Canon Europe Limited

(57) **Abstract**

An information processing apparatus (100) executes a processing for transmitting an information on an external access point (102) to a communication apparatus (101) based on activation of a predetermined application program (203) and without accepting the predetermined user operation in a case that the predetermined application program (203) is activated in a state in which the information representing any one communication apparatus (101) is registered as information held by the predetermined application program (203).

## Description

### BACKGROUND OF THE INVENTION

### Field of the Invention

The present invention relates to a control method, an information processing apparatus, and a computer program.

### Description of the Related Art

There is a conventional technique of sharing a communication apparatus such as a printer between a plurality of information processing apparatuses (to be referred to as PCs hereinafter) via a local area network (LAN) connected to the Internet. A LAN is sometimes constituted by a wireless network. In this case, the installation place of the communication apparatus can be freely selected, compared to a wired network. However, a setting of connecting the communication apparatus to an access point based on information transmitted from the information processing apparatus may be difficult for the user. Japanese Patent No. 6635978 discloses a technique of searching for a printer in a wireless setting mode by a PC, performing Peer to Peer connection (to be referred to as P2P connection hereinafter) to the detected printer, transmitting a wireless profile saved in the PC to the printer, and performing wireless setting of the printer, in order to easily join the printer into a wireless network.

### SUMMARY OF THE INVENTION

The present invention provides more properly executing processing for executing wireless setting of a communication apparatus.

The present invention in its first aspect provides a method of controlling an information processing apparatus as specified in claims 1 to 13.

The present invention in its second aspect provides an information processing apparatus as specified in claim 14.

The present invention in its third aspect provides a computer program as specified in claim 15.

According to the present invention, wireless setting of a communication apparatus can be performed by executing a wireless setting function mounted in a program by a user at a proper timing.

Further features of the present invention will become apparent from the following description of embodiments with reference to the attached drawings.

### BRIEF DESCRIPTION OF THE DRAWINGS

Fig. 1 is a view for explaining a system configuration according to the first embodiment of the present invention;
Fig. 2 is a block diagram showing a communication system including a PC and a printer according to the first embodiment;
Fig. 3A and Fig. 3B are flowcharts for explaining an example of processing performed by executing a setup processing program by the PC and processing executed by the printer according to the first embodiment;
Fig. 4 is a flowchart for explaining processing at the time of activating a general-purpose application according to the first embodiment;
Fig. 5 is a view showing an example of a setup possible printer discovery dialog according to the first embodiment;
Fig. 6 is a view showing an example of an initial screen displayed on the display unit of the PC by the general-purpose application according to the first embodiment;
Fig. 7Ais a view showing an example of a setting success screen representing that wireless setting of the printer is completed, and Fig. 7B is a view showing an example of a setting failure screen representing that wireless setting of the printer failed;
Fig. 8 is a flowchart for explaining processing at the time of activating a general-purpose application according to the second embodiment; and
Fig. 9 is a view showing an example of a setup target printer selection dialog according to the second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

As it is becoming popular to execute wireless setting of a communication apparatus based on information transmitted from an information processing apparatus, it is required to more properly execute processing for executing wireless setting of a communication apparatus.

The present disclosure enables more properly executing processing for executing wireless setting of a communication apparatus.

An information processing apparatus and a communication apparatus included in a communication system according to this embodiment will be described. This embodiment exemplifies a smartphone as the information processing apparatus but the present invention is not limited to this, and various apparatuses such as a terminal device, a notebook PC, a tablet terminal, a Personal Digital Assistant (PDA), and a digital camera are applicable. Furthermore, this embodiment exemplifies a printer as the communication apparatus but the present invention is not limited to this, and various apparatuses are applicable as long as they can wirelessly communicate with the information processing apparatus. For example, this embodiment is applicable to, as a printer, an inkjet printer, a full color laser beam printer, a monochrome printer, or the like. Instead of the printer, this embodiment is also applicable to a copying machine, a facsimile apparatus, a terminal device, a smartphone, a notebook PC, a tablet terminal, a PDA, a digital camera, a music reproduction device, a television, a smart speaker, or the like. Alternatively, this embodiment is also applicable to a multifunction peripheral having a plurality of functions such as a copy function, a FAX function, and a print function.

### [First Embodiment]

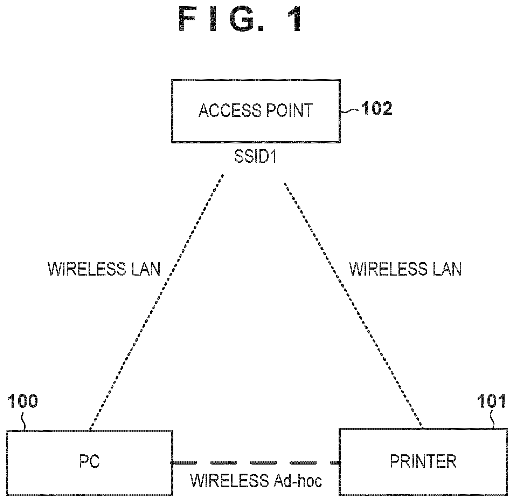

Fig. 1 is a view for explaining a system configuration according to the first embodiment of the present invention.

The system according to the first embodiment includes devices such as a PC and a printer, and one or more access points. In this system, a PC 100 is connected to a Service Set Identifier (SSID) 1 of an access point 102 by a wireless LAN. A printer 101 is also connected to the SSID 1 of the access point 102. That is, the PC 100 can communicate with the printer 101 via the access point 102. The method of connection via an access point is called infrastructure connection. Infrastructure connection can build a network environment where a PC can mutually communicate with two or more devices.

On the other hand, there is also a connection method called wireless direct connection in which only two devices can communicate with each other. P2P connection between the PC 100 and the printer 101 is also possible by wireless direct connection. However, during wireless direct connection, both the PC 100 and the printer 101 use a wireless LAN dongle in wireless direct connection and cannot communicate with other devices. Therefore, wireless direct connection is often used as temporary connection.

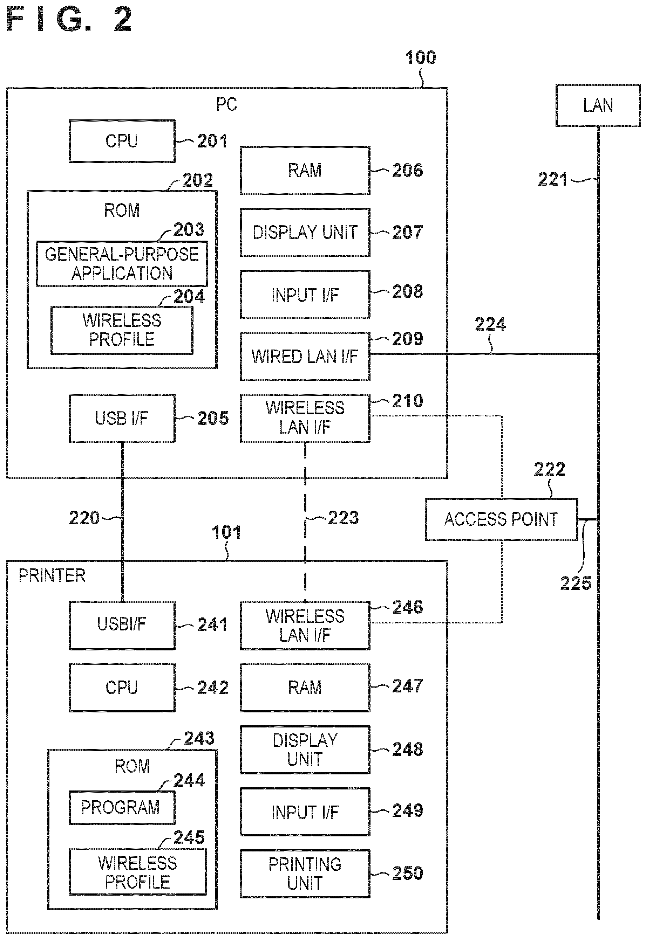

Fig. 2 is a block diagram showing the configuration of a communication system including the PC 100 serving as an information processing apparatus and the printer 101 serving as a communication apparatus according to the first embodiment.

The PC 100 includes a CPU 201, a ROM 202, a RAM 206, a display unit 207, and an input interface (I/F) 208. The PC 100 also includes a USB I/F 205, a wired LAN I/F 209, and a wireless LAN I/F 210. However, it is sufficient for the PC 100 to include at least one of the USB I/F 205, the wired LAN I/F 209, and the wireless LAN I/F 210. The ROM 202 stores a general-purpose application 203 and a wireless profile 204 (to be described later), and the like. Note that the ROM 202 is not a read only memory but a readable/writable nonvolatile memory. In response to an instruction via the input I/F 208 to activate the general-purpose application 203, the CPU 201 deploys the general-purpose application 203 from the ROM 202 to the RAM 206, and activates the general-purpose application 203.

The PC 100 can perform P2P communication with the printer 101 via a USB cable 220 or a wireless direct connection 223. The PC 100 can also be connected to a LAN 221 via an Ethernet cable 224. If the printer 101 can also be connected to the LAN 221, the PC 100 and the printer 101 can mutually communicate with each other on the same LAN 221. The PC 100 can be connected to the LAN 221 by connecting the PC 100 to an access point 222 by a wireless LAN (infrastructure connection), and connecting the access point 222 to the LAN 221 via an Ethernet cable 225. The wireless profile 204 is information including specification information (SSID or the like) of the access point 222 connected by the wireless LAN I/F 210 and authentication information (password or the like) used for authentication processing. The wireless profile 204 is stored or managed by executing an Operating System (OS: not shown) included in the ROM 202 by the CPU 201.

The printer 101 includes a CPU 242, a ROM 243, a RAM 247, a display unit 248, an input I/F 249, a printing unit 250, a USB I/F 241, and a wireless LAN I/F 246. The ROM 243 stores a program 244, a wireless profile 245, and the like. Note that the ROM 243 is not a read only memory but a readable/writable nonvolatile memory. The CPU 242 executes various control operations by the printer 101 by deploying the program 244 from the ROM 243 to the RAM 247 and executing it. Note that the printer 101 may not include the USB I/F 241.

The printer 101 can perform P2P communication with the PC 100 via the USB cable 220 or the wireless direct connection 223. The printer 101 can be connected to the LAN 221 by connecting the printer 101 to the access point 222 via a wireless LAN (infrastructure connection), and connecting the access point 222 to the LAN 221 via the Ethernet cable 225. The wireless profile 245 is information including settings such as the SSID of the access point 222 connected by the wireless LAN I/F 246 and authentication information (password or the like). The wireless profile 245 is stored or managed by executing the program 244 stored in the ROM 243 by the CPU 242.

The ROM 243 also stores a unique SSID. The unique SSID is the SSID of a network formed by the printer 101 that operates in a connection setting mode (to be described later). The SSID is uniquely set for each printer manufacturer and a printer model and is a character string complying with a unique naming rule. For example, for a model of printer B manufactured by manufacturer AAA, the SSID is "AAA_PRINTER B_0123456". By randomly setting the end "0123456" of the character string, individuals can be discriminated even for the same manufacturer and the same printer model. The wireless LAN I/F 246 of the printer 101 can operate as an access point corresponding to the unique SSID.

The mode and connection method of the printer 101 for executing wireless communication will be explained below.

### <Direct Connection Method>

Direct connection is a form in which apparatuses are wirelessly connected directly (that is, by Peer to Peer) without the mediacy of an external apparatus such as the access point 102. Direct connection is also called Peer to Peer connection (P2P connection). As one connection mode, the printer 101 can operate in a mode (direct connection mode) for communication by direct connection. In Wi-Fi communication, the mode for communication by direct connection includes a plurality of modes such as a software AP mode and a Wi-Fi Direct (WFD) mode.

A mode in which direct connection is executed by WFD is called a WFD mode. WFD is a standard developed by Wi-Fi Alliance and is a standard included in the IEEE 802.11 communication standards. In the WFD mode, a device serving as a communication partner is searched for by a device search command, then the roles of a P2P group owner (GO) and P2P client are decided, and remaining wireless connection processing is performed. The group owner corresponds to a Wi-Fi master station (master unit), and the client corresponds to a Wi-Fi slave station (slave unit). This role making corresponds to, for example, Go Negotiation in P2P. Note that in the WFD mode in a state before role making is performed, the printer 101 is neither the master station nor the slave station. More specifically, first, one of devices to communicate with each other issues a device search command and searches for a device to be connected in the WFD mode. After the other device serving as a communication partner is found, the devices confirm information about services and functions that can be supplied by the respective devices. Note that the device supply information confirmation is an option and is dispensable. The device supply information confirmation phase corresponds to, for example, P2P Provision Discovery. Then, the devices confirm the device supply information and decide, as roles, which device serves as a P2P client and which device serves as a P2P group owner. After the client and the group owner are decided, the devices exchange parameters for performing WFD communication. Based on the exchanged parameters, the P2P client and the P2P group owner perform remaining wireless connection processing and IP connection processing. In the WFD mode, the printer 101 may always operate as the GO without executing the above-described GO Negotiation. That is, the printer 101 may operate in the WFD mode that is an Autonomous GO mode. The state in which the printer 101 operates in the WFD mode is, for example, a state in which WFD connection is not established but the printer 101 operates as the GO, or a state in which WFD connection is established and the printer 101 operates as the GO.

In the software AP mode, one device (for example, the PC 100) among devices (for example, the PC 100 and the printer 101) to communicate with each other serves as a client that plays a role of requesting various services. The other device implements the function of an access point in Wi-Fi by software setting. The software AP corresponds to a Wi-Fi master station, and the client corresponds to a Wi-Fi slave station. In the software AP mode, the client searches for a device serving as a software AP by a device search command. After the software AP is found, the client and the software AP perform remaining wireless connection processing (establishment of wireless connection and the like) and IP connection processing (assignment of an IP address and the like). Commands and parameters transmitted/received when implementing wireless connection between the client and the software AP suffice to be those defined by the Wi-Fi standard, and a description thereof will be omitted here.

In this embodiment, when the printer 101 establishes and maintains direct connection, it operates as a master station in a network to which the printer 101 belongs. Note that the master station is an apparatus that builds a wireless network, and is an apparatus that provides a slave station with parameters used in connection to the wireless network. The parameters used in connection to the wireless network are, for example, parameters about a channel used by the master station. The slave station receives the parameters and connects to the wireless network built by the master station by using the channel used by the master station. In the direct connection mode, the printer 101 operates as the master station and can decide a specific frequency band and channel used for communication in the direct connection mode. In this embodiment, the printer 101 can use a channel corresponding to the 2.4-GHz frequency band and a channel corresponding to the 5-GHz frequency band for communication in the direct connection mode.

### <Infrastructure Connection Method>

Infrastructure connection is a connection form in which devices (for example, the PC 100 and the printer 101) to communicate with each other are connected to an access point (for example, the access point 102) that controls a network of the devices, and the devices communicate with each other via the access point. As one connection mode, the printer 101 can operate in a mode (infrastructure connection mode) for communication in infrastructure connection.

In infrastructure connection, each device searches for an access point by a device search command. After an access point is found, the device and the access point perform remaining wireless connection processing (establishment of wireless connection and the like) and then IP connection processing (assignment of an IP address and the like). Commands and parameters transmitted/received when implementing wireless connection between the device and the access point suffice to be those defined by the Wi-Fi standard, and a description thereof will be omitted here.

In this embodiment, when the printer 101 operates in infrastructure connection, the access point 102 operates as a master station and the printer 101 operates as a slave unit. That is, in this embodiment, infrastructure connection means connection between the printer 101 operating as a slave unit and the apparatus operating as a master unit. When the printer 101 establishes infrastructure connection and the PC 100 also establishes infrastructure connection with the access point 102, the printer 101 and the PC 100 can communicate with each other via the access point 102. Since the access point 102 decides a channel used for communication in infrastructure connection, the printer 101 executes communication in infrastructure connection by using the channel decided by the access point 102. In this embodiment, the printer 101 can use a channel corresponding to the 2.4-GHz frequency band and a channel corresponding to the 5-GHz frequency band for communication in infrastructure connection. Note that the printer 101 can also use a channel corresponding to the DFS band in the 5-GHz frequency band for communication in infrastructure connection. To communicate with the printer 101 via the access point 102, the PC 100 needs to recognize that the printer 101 belongs to a network which is formed by the access point 102 and to which the PC 100 belongs.

### <Wireless Setting Mode>

The printer 101 can operate in the wireless setting mode. A trigger for the printer 101 to start an operation in the wireless setting mode may be, for example, pressing a wireless setting mode button by the user or activating (turning on) the printer 101 for the first time after arrival. The wireless setting mode button may be a hard (physical) button of the printer 101 or a software button displayed on the display unit 248 by the printer 101.

When the printer 101 starts an operation in the wireless setting mode, it enables Wi-Fi communication. More specifically, as Wi-Fi communication enabling processing, the printer 101 enables an internal AP (connection setting AP) of the printer 101 that is dedicated to the wireless setting mode. Then, the printer 101 can establish direct connection with the PC 100 by Wi-Fi. Connection information (SSID and password) for connecting to the connection setting AP is held in advance in a setup application installed in the PC 100, and the PC 100 recognizes in advance the connection information for connecting to the connection setting AP. Unlike AP connection information enabled in the direct connection mode, the connection information for connecting to the connection setting AP cannot be changed arbitrarily by the user. In the wireless setting mode, the printer 101 may be connected to the PC 100 by not normal Wi-Fi but Wi-Fi Direct (WFD). That is, the printer 101 may operate as a group owner and receive a setting command from the PC 100 by WFD communication. Alternatively, the printer 101 may be connected to the PC 100 by Bluetooth in the wireless setting mode. Here, Bluetooth includes Bluetooth Classic and Bluetooth Low Energy (BLE). That is, for example, the printer 101 may operate as a slave apparatus in BLE in the wireless setting mode and receive a setting command from the PC 100 by BLE communication. In the wireless setting mode, the printer 101 may be able to execute both network setup by Wi-Fi and network setup by BLE. That is, when the printer 101 starts an operation in the wireless setting mode, it may enable both Wi-Fi communication and BLE communication. More specifically, when the printer 101 starts an operation in the wireless setting mode, it may execute both enabling of the connection setting AP and enabling of an advertising state in which BLE connection is possible by transmitting advertising information by BLE.

P2P communication by the wireless direct connection 223 according to the first embodiment may be a communication method using no access point, or a method in which the PC 100 or the printer 101 operates as an access point. For example, the wireless LAN I/F 246 of the printer 101 operates as an access point corresponding to the above-mentioned unique SSID. In this case, the wireless LAN I/F 210 of the PC 100 is connected to the wireless LAN I/F 246 serving as the access point corresponding to the unique SSID. According to this method, the PC 100 can be directly connected to the printer 101 by connection processing similar to the external access point 222. Even when the PC 100 cannot execute processing for direct connection without the mediacy of an access point, it can perform P2P communication with the printer 101.

In the printer 101 according to the first embodiment, the user can perform an operation of connecting the printer 101 to a desired access point in accordance with a display on the display unit 248. For example, the user can input an SSID or password corresponding to the desired access point via the display unit 248 of the printer 101, and connect the printer 101 to the access point.

The display unit 248 of the printer 101 takes various forms depending on the type of the printer 101, such as a compact liquid crystal display, a segment liquid crystal display, and blinking display of an LED. For example, when the display unit 248 of the printer 101 only performs blinking display of an LED, an operation for connecting the printer 101 to a desired access point may become more difficult than by a liquid crystal display capable of a satisfactory representation.

In the first embodiment, therefore, the general-purpose application 203 performs wireless network setting processing (to be described later) to connect the printer 101 to the predetermined access point 102. Even a user unfamiliar with an operation on the printer 101 can easily connect the printer 101 to the desired access point 102. Particularly when it is difficult to perform an operation for connecting the printer 101 to the desired access point 102 via the display unit 248 of the printer 101, as described above, the user can easily perform the operation in accordance with a display on the display unit 207 of the PC 100.

Note that the printer 101 needs to shift to the wireless setting mode (to be described later) in order to connect the printer 101 to the access point 102 by wireless network setting processing by the general-purpose application 203. Thus, the printer 101 is configured to shift to the wireless setting mode when the user inputs a predetermined instruction on the display unit 248. Note that the printer 101 may automatically shift to the wireless setting mode at the time of initial power-on. In general, the operation of connecting the printer 101 to the access point 102 is preferably executed at a timing to start the use of the printer 101 after installation. When the printer is turned on for the first time, the printer automatically shifts to the wireless setting mode and wireless network setting processing can be executed at an appropriate timing without a user operation.

Next, the general-purpose application 203 will be explained.

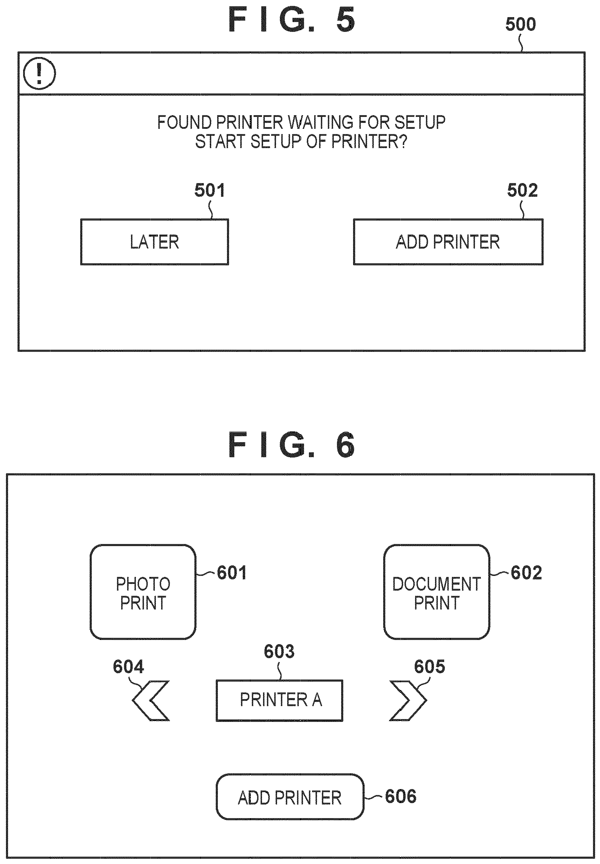

Fig. 6 is a view showing an example of an initial screen displayed on the display unit 207 of the PC 100 by the general-purpose application 203 according to the first embodiment.

The general-purpose application 203 provides commonly available functions to a plurality of printers. For example, when a photo print button 601 is pressed, the general-purpose application 203 displays, on the display unit 207, a user interface (UI) for accepting an instruction about an image file to be printed among image files (not shown) saved in the ROM 202. The general-purpose application 203 reads out the image file designated via the UI, and instructs the printer driver of a selected printer to print the image file.

When a document print button 602 is pressed, the general-purpose application 203 displays, on the display unit 207, a UI for accepting an instruction about a document file to be printed among document files (not shown) saved in the ROM 202. The general-purpose application 203 reads out the designated document file, and instructs the printer driver of a selected printer to print the document file. The general-purpose application 203 displays the selected printer in an area 603. In Fig. 6, "printer A" is selected.

The general-purpose application 203 holds a list of selectable printers, and switches a selected printer from printers included in the list in accordance with press of a button 604 or a button 605. The list of selectable printers held by the general-purpose application 203 is created by, for example, obtaining a list of print queues managed by the OS and extracting only printers in which the names of printer drivers assigned to respective print queues include a specific character string. The general-purpose application 203 can create a list that allows selecting only printers of a development vendor.

When a printer add button 606 is pressed, the general-purpose application 203 executes wireless network setting processing for connecting a target printer to the access point 102 connected to the PC 100. The general-purpose application 203 can add a printer connected to the access point 102 to a print queue managed by the OS, thereby adding it to a list of selectable printers. In the first embodiment, the general-purpose application 203 connects the printer 101 to the access point 102 and registers it to a print queue managed by the OS, thereby adding the printer 101 as a selectable printer.

As described above, to execute wireless network setting processing by the general-purpose application 203, the printer 101 needs to shift to the wireless setting mode. That is, when the printer 101 shifts to the wireless setting mode in accordance with a predetermined instruction from the user, or after the printer 101 shifts to the wireless setting mode at the time of initial power-on, the general-purpose application 203 needs to execute wireless network setting processing. Note that a vendor generally guides a user who bought a printer, concerning a printer installation method by a Web page or a paper manual. The vendor shows an operation for shifting the printer to the wireless setting mode, and then prompts the user to install the general-purpose application 203. The general-purpose application 203 executes wireless network setting processing at the time of initial activation, and a wireless network can be set at the time of installing the printer.

However, when the general-purpose application 203 has already been installed in advance, for example, when the second or subsequent printer is bought, the general-purpose application 203 cannot execute wireless network setting processing at the time of initial activation. The user therefore needs to activate the general-purpose application 203 and press the printer add button 606, but it is difficult to determine a timing to press the printer add button 606. Particularly for software provided from a server that distributes applications provided by an OS vendor such as Microsoft Store^{®} in Windows^{®} OS, processing of adding an own parameter at the time of activation and executing a specific function cannot be performed. That is, it is not possible to perform control such as only when it is determined that installation procedures were announced by the above-mentioned Web page or paper manual, wireless network setting processing at the time of initial activation executed.

To solve this, according to the first embodiment, the general-purpose application 203 searches for a printer in the wireless setting mode near the PC 100, and when it detects a printer shifted to the wireless setting mode, automatically executes wireless network setting processing. Wireless network setting processing can be executed at an appropriate timing without determining by the user whether he needs to press the printer add button 606.

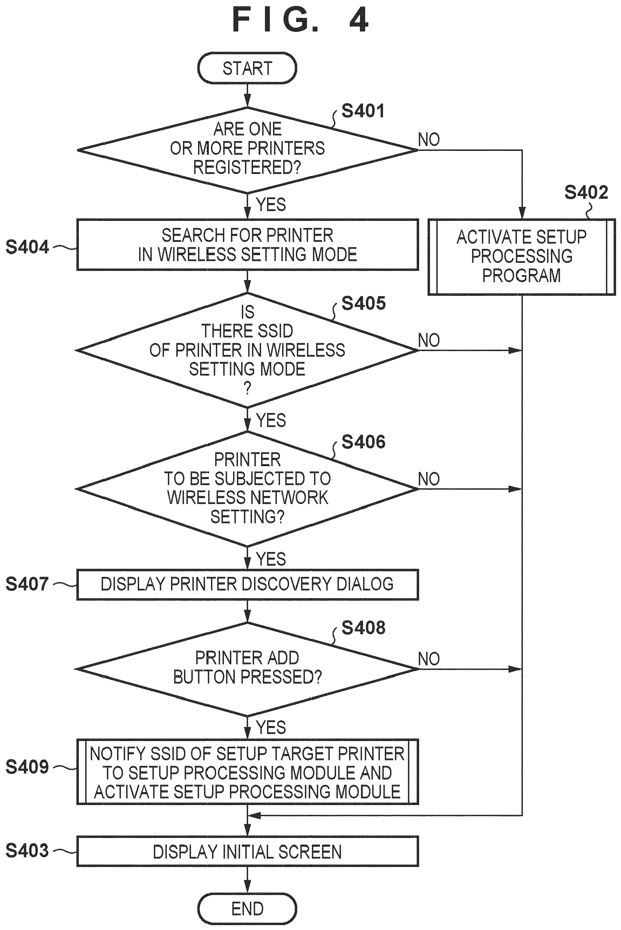

Fig. 4 is a flowchart for explaining processing at the time of activating the general-purpose application 203 according to the first embodiment. In the PC 100, the user inputs a predetermined instruction through the input I/F 208, and the CPU 201 deploys the general-purpose application 203 from the ROM 202 to the RAM 206 and activates it. The general-purpose application 203 starts processing based on the activation by the CPU 201, executing processing shown in Fig. 4. Note that the processing shown in Fig. 4 is implemented by executing the general-purpose application 203 by the CPU 201.

First, in step S401, the CPU 201 refers to a list of selectable printers and determines whether one or more printers are registered. If the CPU 201 determines that no printer is registered, the process advances to step S402, and the CPU 201 activates a setup processing program for executing wireless network setting processing. The wireless network setting processing executed by the setup processing program will be described later. Note that the setup processing program may be saved in the ROM 202 as a program other than the general-purpose application 203, or included in the general-purpose application 203 and saved in the ROM 202. In the former case, when step S402 is executed, the general-purpose application 203 reads out the setup processing program from the ROM 202 and activates it. After processing of the setup processing program ends, the process advances to step S403, for example, an initial screen of the application as shown in Fig. 6 is displayed, and the processing at the time of activation ends.

In contrast, if the CPU 201 determines in step S401 that one or more printers are registered, the process advances to step S404, and the CPU 201 searches for the printer 101 in the wireless setting mode (to be described later). Then, the process advances to step S405, and the CPU 201 determines the search result. More specifically, the CPU 201 searches for an access point corresponding to an SSID complying with the above-described unique naming rule, and determines whether the search is successful. If the CPU 201 determines in step S405 that a printer in the wireless setting mode has been detected (one or more access points of the SSID complying with the naming rule have been detected), the process advances to step S406. In step S406, the CPU 201 determines based on the detected SSID whether the detected printer is a printer subjected to wireless network setting processing. This determination is performed in order not to execute wireless network setting processing by the general-purpose application 203 on a printer that cannot properly perform wireless setting when the target printer is too old or too new.

More specifically, in step S406, the CPU 201 determines whether the printer of the detected SSID is included as a target printer in a list of wireless network setting target printers held in advance. Here, the CPU 201 can specify a printer name from a unique SSID in accordance with the above-described unique naming rule of the SSID. For example, for an SSID
"AAA PRINTER B_0123456", the CPU 201 determines that the printer is a model of printer B, and determines whether printer B is included in a list of wireless network setting target printers. If the CPU 201 determines in step S406 that the detected printer is a printer subjected to wireless network setting processing, the process advances to step S407, and the CPU 201 displays, for example, a setup possible printer discovery dialog 500 as shown in Fig. 5 on the display unit 207.

Fig. 5 is a view showing an example of the setup possible printer discovery dialog according to the first embodiment.

The printer discovery dialog 500 includes a message that a printer waiting for setup has been found, a "later" button (first object) 501, and a printer add button (second object) 502. The "later" button 501 is a button for closing the discovery dialog 500 without executing setup processing. The printer add button 502 is a button for activating a setup processing program.

Then, the process advances to step S408, and the CPU 201 determines whether the printer add button 502 of the printer discovery dialog 500 has been pressed. If the CPU 201 determines that the printer add button 502 has been pressed, the process advances to step S409. In step S409, the CPU 201 sets an argument for the detected SSID and activates a setup processing program. After the setup processing program ends, the process advances to step S403, and the CPU 201 displays an initial screen of the application as shown in Fig. 6 and ends the processing.

If the CPU 201 determines in step S405 that a printer in the wireless setting mode has not been detected, or in step S406 that the detected printer is not a printer subjected to wireless network setting processing, the process advances to step S403, and the CPU 201 displays the initial screen of the application as shown in Fig. 6 and ends the processing at the time of activation. Also, if the CPU 201 determines in step S408 that the "later" button 501 has been pressed in the discovery dialog 500, the process advances to step S403, and the CPU 201 displays the initial screen and ends the processing.

Next, processing executed by the setup processing program, and processing executed by the printer 101 based on an instruction from the setup processing program will be explained.

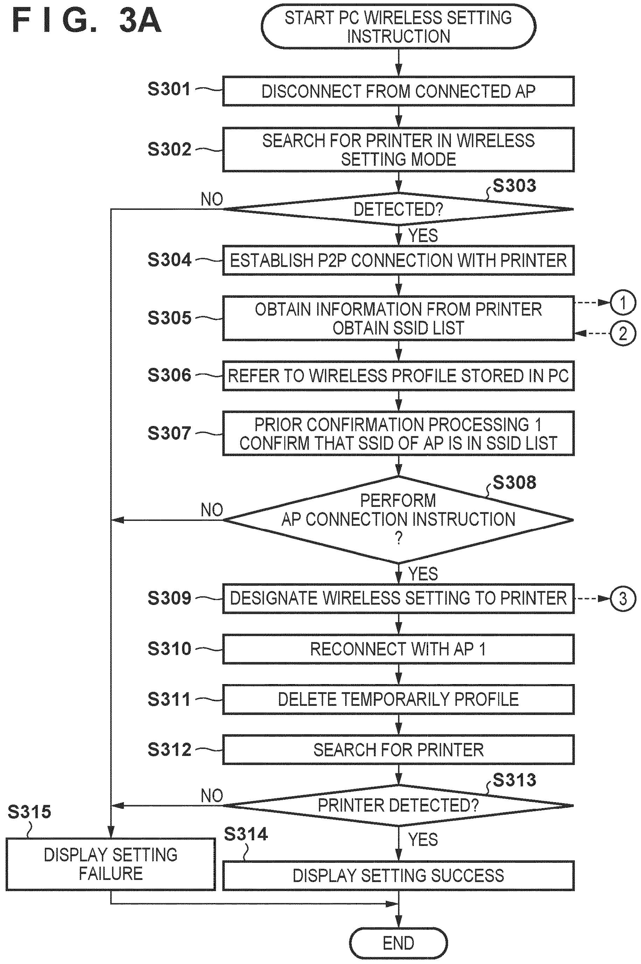

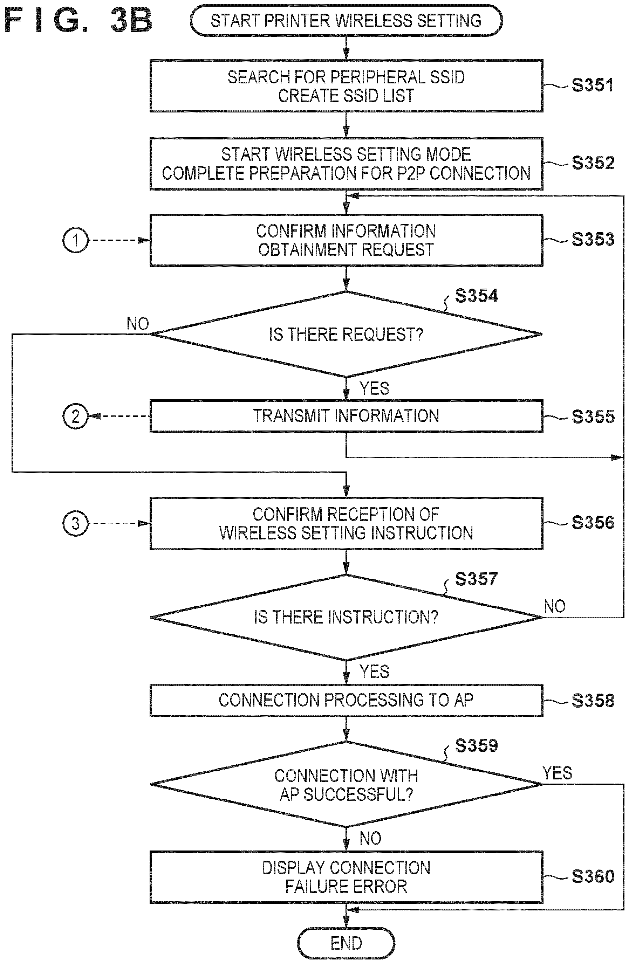

Fig. 3A and Fig.3B are flowcharts for explaining an example of processing performed by executing the setup processing program by the PC 100 and processing executed by the printer 101 according to the first embodiment. Note that the PC 100 has already been connected to the external access point 102, and the SSID password of the access point 102 is stored in the wireless profile 204. The setup processing program is activated by the general-purpose application 203 in step S402 or S409 of Fig. 4, starting processing for a wireless setting instruction by the PC 100. Note that the processing by the PC 100 shown in this flowchart is implemented by executing the setup processing program by the CPU 201.

First, in step S301, the CPU 201 disconnects the wireless connection between the PC 100 and the access point 102. Then, the process advances to step S302, and the CPU 201 searches for the printer 101 in the wireless setting mode (to be described later) and determines the search result in step S303. More specifically, the CPU 201 searches for an access point corresponding to an SSID complying with the above-described unique naming rule, and determines whether the search is successful. If the CPU 201 determines in step S303 that a printer in the wireless setting mode has been detected (access point of the SSID complying with the naming rule has been detected), the process advances to step S304, and the CPU 201 performs wireless direct connection with the printer 101. More specifically, the CPU 201 connects the wireless LAN I/F 210 to the access point of the detected SSID. In step S409, when the setup processing program receives an SSID as an argument from the general-purpose application 203 and is activated, the processes in steps S302 and S303 are skipped. That is, when the setup processing program is activated in step S409, the CPU 201 performs wireless direct connection with the printer 101 using the detected SSID without searching again for a printer in the wireless setting mode.

Then, the process advances to step S305, and the CPU 201 issues an information obtaining request to the printer 101, obtains a response from the printer 101, and receives an SSID list. The SSID list represents access points searched by the printer 101, details of which will be described later. Also, in step S305, the CPU 201 receives even identification information (MAC address and the like) of the printer 101 from the printer 101.

The process advances to step S306, and the CPU 201 refers to the wireless profile 204 stored in the ROM 202, and obtains a wireless profile including the SSID of the access point 102 which was connected at the start of processing, and wireless connection of which was disconnected in step S301. The process advances to step S307, and the CPU 201 determines whether the SSID of the access point 102 obtained in step S306 is included in the SSID list obtained in step S305. In the first embodiment, the processing in step S307 is called prior confirmation processing.

The process advances to step S308, and the CPU 201 determines whether to connect the printer 101 to a predetermined access point as a result of the prior confirmation processing in step S307. In step S308, if the CPU 201 determines in step S307 that the SSID of the access point 102 exists in the SSID list, it determines to connect the printer 101 to a predetermined access point. If the CPU 201 determines in step S308 to connect the printer 101 to a predetermined access point, the process advances to step S309, and the CPU 201 transmits information that instructs the printer 101 about wireless setting. More specifically, in step S309, the CPU 201 transmits the wireless profile (including the SSID and the password) of the access point 102 to the printer 101. The process advances to step S310, and the CPU 201 disconnects wireless direct connection with the printer 101 and connects the printer 101 again to the access point 102. Since the wireless profile 204 of the access point 102 is saved in the ROM 202 of the PC 100, the CPU 201 can perform reconnection to the access point 102 in step S310 without requiring input of a password or the like again by the user.

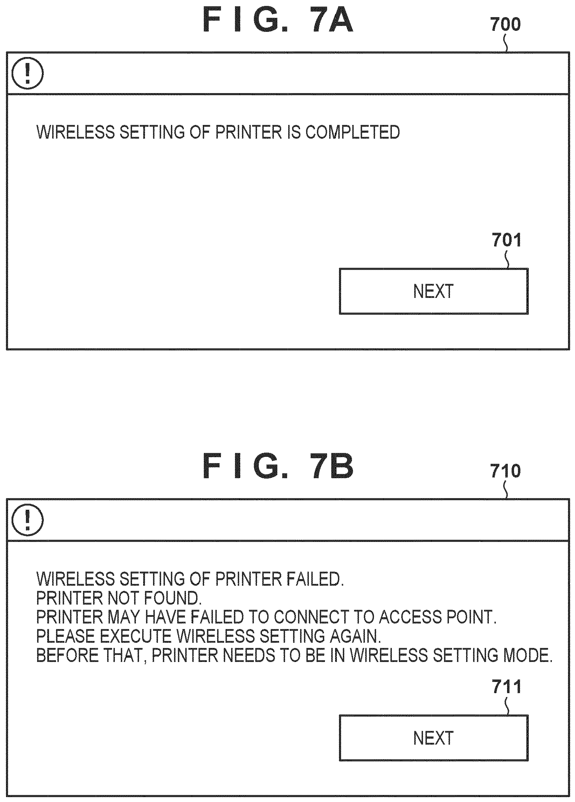

The process advances to step S311, and if the wireless profile temporarily remains in wireless direct connection, the CPU 201 deletes it. The processing in step S311 is performed to avoid a wireless profile of connection not intended by the user from remaining. After that, the process advances to step S312, and the CPU 201 searches for the printer 101 in infrastructure connection through the access point 102. The process advances to step S313, and the CPU 201 determines whether the printer 101 is detected. More specifically, in step S312, the CPU 201 receives identification information (MAC address and the like) from the device connected to the access point 102. Then, the CPU 201 determines whether the received identification information includes identification information coincident with the identification information obtained from the printer 101 in step S305. Thereafter, the process advances to step S313, if the CPU 201 determines that the printer 101 is detected, to step S314, and the CPU 201 displays a setting success screen 700 as shown in Fig. 7A on the display unit 207.

Fig. 7A is a view showing an example of the setting success screen 700 representing that wireless setting of the printer is completed.

The setting success screen 700 has a message that wireless setting of the printer is completed, and a "next" button 701. The "next" button 701 is a button for closing the setting success screen 700. When the user presses the "next" button 701 in the setting success screen 700, the CPU 201 closes the setting success screen 700 and ends the wireless setting instruction processing. Note that the CPU 201 may connect the printer 101 at a timing when the CPU 201 determines in step S313 that the printer 101 is detected, or at a timing when the "next" button 701 is pressed.

If NO in the processing of any one of steps S303, S308, and S313, that is, if the CPU 201 determines that wireless setting in the printer 101 failed, the process advances to step S315, and the CPU 201 displays as an error display, for example, a setting failure screen 710 shown in Fig. 7B representing that wireless setting of the printer failed.

Fig. 7B is a view showing an example of the setting failure screen 710 representing that wireless setting of the printer failed.

The setting failure screen 710 has a message that wireless setting of the printer failed, and a "next" button 711. The "next" button 711 is a button for closing the setting failure screen 710. When the user presses the "next" button 711 in the setting failure screen 710, the CPU 201 closes the setting failure screen 710 and ends the wireless setting instruction processing.

Next, wireless setting processing of the printer 101 in steps S351 to S360 will be explained. When the user inputs a predetermined instruction on the display unit 248 of the printer 101, the wireless setting processing starts. Note that this processing is achieved by executing the setup processing program by the CPU 242 of the printer 101.

After wireless setting processing starts, the printer 101 shifts to the wireless setting mode. As described above, the printer 101 may automatically enter this mode at the time of initial activation. Here, the wireless setting mode of the printer 101 will be described.

After shifting to the wireless setting mode, the printer 101 reads out a unique SSID from the ROM 243, and operates the wireless LAN I/F 246 as an access point having the unique SSID. At this time, the printer 101 is controlled not to operate other functions such as printing. That is, when data is input from the USB I/F 241 or when execution of another function is designated via the input I/F 249, the printer 101 ignores the input and does not operate the function.

In step S351, before shifting to the wireless setting mode, the CPU 242 first searches for (passive scan) peripheral SSIDs and creates an SSID list including detected SSIDs. Then, the process advances to step S352, and the CPU 242 shifts to the wireless setting mode and completes the preparation of wireless direct connection. More specifically, the CPU 242 operates the wireless LAN I/F 246 as the access point of the unique SSID. If the processes in steps S302 to S304 are executed by the setup processing program in the PC 100 in this state, the printer 101 starts P2P communication in accordance with a connection request from the setup processing program. The process advances to step S353, and the CPU 242 checks whether there is an information obtaining request from the setup processing program. If the CPU 242 determines in step S3 54 that there is a request, the process advances to step S355, the CPU 242 executes information transmission processing of transmitting the requested information to the PC 100, and then the process returns to step S353. In step S355, the CPU 242 of the printer 101 transmits the SSID list and identification information (MAC address and the like) of the printer 101 to the PC 100. As described above, the PC 100 receives the identification information of the printer 101 and the SSID list in step S305.

In contrast, if the CPU 242 determines in step S3 54 that there is no information obtaining request, the process advances to step S356, and the CPU 242 checks whether there is a wireless setting instruction from the setup processing program executed in the PC 100. As described above, this is performed when the PC 100 transmits the wireless profile (including the SSID and the password) of the access point 102 to the printer 101 and issues a wireless setting instruction in step S309. If the CPU 242 determines in step S357 that there is no wireless setting instruction, the process returns to step S353. If the CPU 242 determines in step S357 that there is a wireless setting instruction, the process advances to step S3 58, and the CPU 242 executes connection processing to the access point 102 designated by the PC 100. More specifically, in step S358, the CPU 242 executes connection processing to the access point 102 using the SSID and password included in the wireless profile received from the PC 100. The process advances to step S359, and the CPU 242 determines whether the connection processing is successful. If the CPU 242 determines that the connection processing fails, the process advances to step S360, and the CPU 242 displays a setting failure error (not shown) on the display unit 248 of the printer 101. The user performs an operation to cancel the setting error (not shown) displayed on the display unit 248 of the printer 101, and the printer 101 ends the wireless setting processing. If the CPU 242 determines in step S3 59 that the connection processing is successful, it ends the wireless setting processing.

In this manner, the setup processing program executed by the PC 100 transmits the wireless profile of the already connected access point 102 to the printer 101. Hence, the printer 101 and the access point 102 can be connected without requiring an operation of inputting a password or the like in the printer 101.

As described above, according to the first embodiment, the general-purpose application 203 can prompt the user to execute wireless network setting processing at a proper timing. When the user designates execution of wireless network setting processing, the general-purpose application 203 can execute wireless setting of a printer.

Note that in the first embodiment, the general-purpose application 203 executes the processing shown in the flowchart of Fig. 4 at the timing of activation. In this case, if the printer 101 shifts to the wireless setting mode while the general-purpose application 203 is activated, the user cannot be prompted to execute wireless network setting processing. To solve this, when the general-purpose application 203 has another UI screen different from the initial screen shown in Fig. 6, the processing shown in the flowchart of Fig. 4 may be executed at a timing when the screen shifts from the other UI screen to the initial screen, in addition to the timing of activation. For example, when the photo print button 601 is pressed, the general-purpose application 203 displays another UI screen for designating an image file to be printed, and after execution of printing, the processing shown in the flowchart of Fig. 4 is executed at a timing when the screen shifts to the initial screen. In this case, even if the printer 101 shifts to the wireless setting mode while the general-purpose application 203 is activated, the user can be prompted to execute wireless network setting processing without reactivating the general-purpose application 203.

In this embodiment, detection of a printer waiting for setup may be notified by the notification function (toast) of the OS. That is, when the general-purpose application is activated or a specific screen is displayed, SSID scan is executed, and if the SSID of a target printer is detected, a toast is displayed. If the toast is tapped, the setup module of the printer is activated.

Even at a timing other than activation as described above, when the general-purpose application 203 executes the processing shown in the flowchart of Fig. 4, a printer that skipped wireless network setting processing once may be prompted many times to execute the setting processing. That is, after the "later" button 501 of the discovery dialog 500 is pressed to skip wireless network setting processing, the discovery dialog 500 is displayed again at a timing when the initial screen is displayed, which is cumbersome to the user.

To prevent this, the general-purpose application 203 holds the SSID of a detected printer, and when the "later" button 501 of the discovery dialog 500 is pressed, saves the SSID as a printer not subjected to wireless network setting. When determining the SSID of a detected printer in subsequent step S405 next time, the general-purpose application 203 determines whether the SSID coincides with the saved SSID of the untargeted printer, and if these SSIDs coincide with each other, determines in step S406 that the printer is an untargeted printer. Even when the general-purpose application 203 executes the processing shown in the flowchart of Fig. 4 at a timing other than activation, a printer that skipped wireless network setting processing once is not prompted many times to execute the setting processing.

When the general-purpose application 203 determines in step S401 of Fig. 4 that one or more printers are registered, and displays the discovery dialog 500 in step S407, this may be a timing when the second or subsequent printer is installed owing to repurchase of a printer or the like. In this case, it is not preferable to display, in the area 603 of the initial screen, an old printer used by the user so far as a selectable printer by the general-purpose application 203. To prevent this, the general-purpose application 203 may execute processing of deleting the registered old printer after the processing in step S409 of Fig. 4. More specifically, the selected printer displayed in the area 603 of the initial screen is deleted from a selectable printer list held by the general-purpose application 203. It can therefore be controlled not to display, as a selectable printer by the general-purpose application 203, the old printer not used by the user any more owing to repurchase of a printer or the like.

Further, in a case where a printer is repurchased, as described above, a newly installed printer may be able to provide new functions and services that cannot be used in a printer before repurchase. For example, a decorative printing function using a special ink, automatic delivery service of consumables, and the like may be newly utilized. Information about new functions and services are preferably presented to the user at a timing when the use of a printer starts. To do this, the general-purpose application 203 communicates with an information management server (not shown) after the processing in step S409 of Fig. 4, and displays on the display unit 207 of the PC 100 information about new functions and services provided by the setup target printer.

More specifically, the general-purpose application 203 transmits the name of the setup target printer to the information management server, and obtains the URL of a Web page posting contents about functions and services corresponding to the printer name. The obtained URL is designated and a browser is activated. The information about functions and services newly available in the printer during setup can be presented to the user at a timing when the user starts using the printer.

### [Second Embodiment]

In the above-described first embodiment, the general-purpose application 203 executes wireless network setting processing on one printer in the wireless setting mode that is detected in step S404. When a plurality of printers exist in an office or the like, a plurality of printers shifted in the wireless setting mode may be detected. In this case, the general-purpose application 203 may select, for example, a printer detected first as a processing target printer. However, the printer detected first by the general-purpose application 203 may be different from a printer to which the user wants to execute wireless network setting.

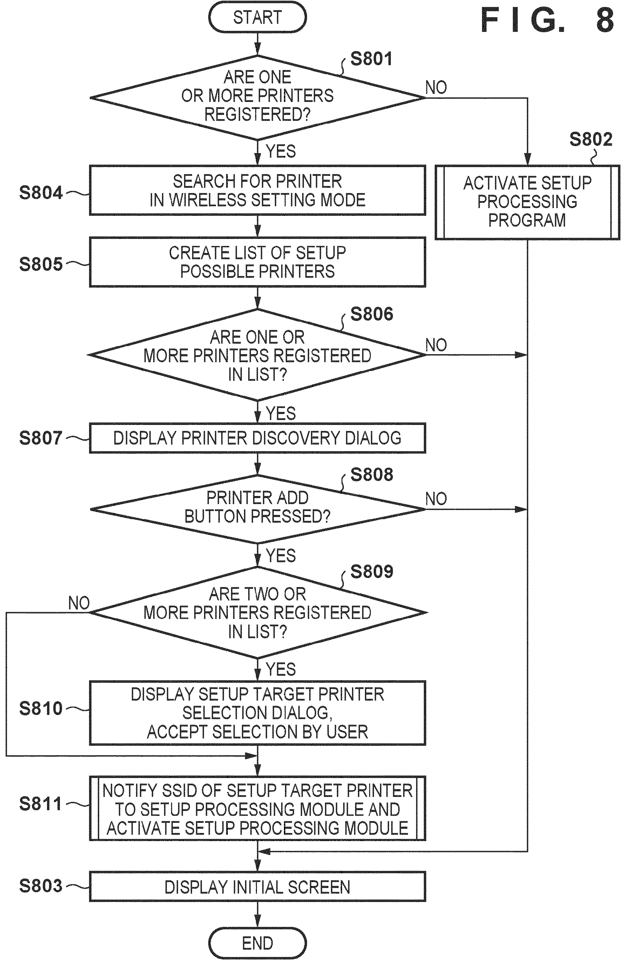

Considering this, the second embodiment will describe a technique of executing wireless network setting processing on an appropriate printer from a general-purpose application 203 even when the general-purpose application 203 detects a plurality of printers shifted in the wireless setting mode. Fig. 8 is a flowchart for explaining processing at the time of activating the general-purpose application 203 according to the second embodiment. In a PC 100, the user inputs a predetermined instruction through an input I/F 208, and a CPU 201 deploys the general-purpose application 203 from a ROM 202 to a RAM 206 and activates it. The general-purpose application 203 starts processing based on the activation by the CPU 201, executing processing shown in Fig. 8. Note that the processing shown in Fig. 8 is implemented by executing the general-purpose application 203 by the CPU 201. Processes in steps S801 to S804 and S811 of Fig. 8 are similar to those in steps S401 to S404 and S409 of Fig. 4, and a description thereof will not be repeated.

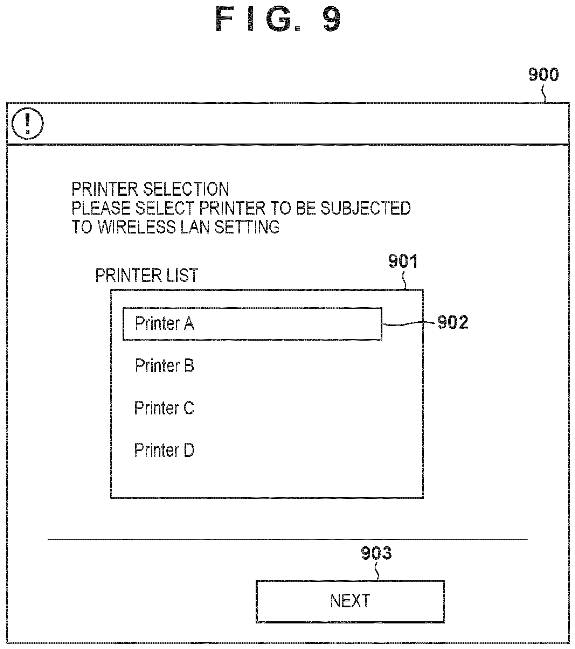

In step S805, the CPU 201 creates and holds a setup possible printer list of detected printers in the wireless setting mode. More specifically, the CPU 201 searches for an access point corresponding to an SSID complying with the above-described unique naming rule, determines all detected access points as printers shifted to the wireless setting mode, registers them in the list, and holds the list. The process advances to step S806, and the CPU 201 determines whether one or more printers are registered in the list. If the CPU 201 determines that one or more printers are registered in the list, the process advances to step S807, and the CPU 201 displays a setup possible printer discovery dialog 500 shown in Fig. 5 on a display unit 207. The process advances to step S808, and the CPU 201 determines whether a printer add button 502 has been pressed in the discovery dialog 500. If the CPU 201 determines that the printer add button 502 has been pressed, the process advances to step S809, and the CPU 201 determines whether two or more printers are registered in the list. If the CPU 201 determines that two or more printers are registered in the list, the process advances to step S810, and the CPU 201 displays a setup target printer selection dialog shown in Fig. 9 and accepts selection of a setup target printer.

Fig. 9 is a view showing an example of the setup target printer selection dialog according to the second embodiment.

A selection dialog 900 includes a message prompting selection of a setup target printer subjected to wireless LAN setting, a printer display area 901, a selected printer display 902, and a "next" button 903. In the printer display area 901, a list of printers registered in the setup possible printer list is displayed. The selected printer display 902 is a UI display representing a currently selected printer among printers displayed in the printer display area 901. The "next" button 903 is a button for finalizing a target printer and closing the selection dialog 900. In this manner, the setup target printer selection dialog 900 accepts designation of a setup target printer by a user operation, and allows designating a printer selected in the selected printer display 902 as a setup target printer.

The setup target printer is finalized based on press of the "next" button 903 in the setup target printer selection dialog 900, and the process advances to step S811. Note that if it is determined in step S809 that only one printer is registered in the list, the general-purpose application 203 finalizes one registered printer as a setup target printer, and the process skips processing in step S810 and advances to step S811. In step S811, the CPU 201 sets an argument for the SSID of the setup target printer and activates a setup processing program. Note that processing of the setup processing module in step S811 is similar to the contents described in the first embodiment with reference to Fig. 3A and Fig.3B, and a description thereof will not be repeated.

In the second embodiment, the general-purpose application 203 registers all detected access points as setup possible printers in the list in step S805, but may determine whether an access point can be registered in the list. For example, the general-purpose application 203 determines the radio field intensity of a detected access point, and registers in the list only an access point that satisfies a predetermined condition, for example, has a predetermined intensity or more. This can suppress a case where a printer in a neighboring house in collective housing or the like is erroneously detected.

As described above, according to the second embodiment, even when an information processing apparatus detects a plurality of printers shifted to the wireless setting mode, wireless network setting processing can be executed on a proper printer.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but defined by the scope of the following claims.

## Claims

1. A method of controlling an information processing apparatus (100) including a predetermined application program (203) for communicating with a communication apparatus (101), the method comprising:
executing first processing for transmitting information on an external access point (102) to the communication apparatus (101) based on a predetermined user operation to a screen displayed by the predetermined application program (203) based on the predetermined application program (203) being activated;
executing second processing of registering, as information held by the predetermined application program (203), information representing the communication apparatus (101) which has served as a transmission destination of the information on the external access point (102) after executing the first processing; and
executing third processing for transmitting the information on the external access point (102) to the communication apparatus (101) based on activation of the predetermined application program (203) and without accepting the predetermined user operation in a case that the predetermined application program (203) is activated in a state in which the information representing any one communication apparatus (101) is registered as information held by the predetermined application program (203) by executing the second processing.

2. The method according to claim 1, wherein the third processing includes fourth processing of searching for the communication apparatus (101) operating in a predetermined mode for receiving the information on the external access point (102), and
the information on the external access point (102) is transmitted to the communication apparatus (101) operating in the predetermined mode that is detected by executing the fourth processing.

3. The method according to claim 2, wherein in a case that the communication apparatus (101) operating in the predetermined mode is detected by executing the fourth processing, a predetermined notification area for notifying a user that the communication apparatus (101) operating in the predetermined mode is detected is displayed, and in a case that the communication apparatus (101) operating in the predetermined mode is not detected by executing the fourth processing, the predetermined notification area is not displayed.

4. The method according to claim 3, wherein the predetermined notification area includes a first button for executing processing of transmitting the information on the external access point (102) to the communication apparatus (101), and a second button for not executing the processing of transmitting the information on the external access point (102) to the communication apparatus (101), and
in a case that the first button is selected, the processing of transmitting the information on the external access point (102) to the communication apparatus (101) is executed, and in a case that the second button is selected, the processing of transmitting the information on the external access point (102) to the communication apparatus (101) is not executed.

5. The method according to claim 4, wherein in a case that the first button is selected, connection between the communication apparatus (101) operating in the predetermined mode and the information processing apparatus (100) is established, and
the information on the external access point (102) is transmitted via the connection between the communication apparatus (101) operating in the predetermined mode and the information processing apparatus (100).

6. The method according to claim 4 or 5, wherein in a case that the first button is selected, the connection between the communication apparatus (101) operating in the predetermined mode and the information processing apparatus (100) is established without searching again, by the predetermined application program (203), for the communication apparatus (101) operating in the predetermined mode.

7. The method according to any one of claims 1 to 6, wherein the third processing includes fifth processing of establishing connection between the communication apparatus (101) and the information processing apparatus (100), and
the information on the external access point (102) is transmitted via the connection between the communication apparatus (101) and the information processing apparatus (100).

8. The method according to any one of claims 1 to 7, wherein even in a case that the predetermined application program (203) is activated in a state in which information representing the communication apparatus (101) is not registered as information held by the predetermined application program (203), the third processing is executed based on activation of the predetermined application program (203) without accepting the predetermined user operation.

9. The method according to any one of claims 1 to 8, wherein the communication apparatus (101) corresponding to information registered as the information held by the predetermined application program (203) by executing the second processing is a first communication apparatus (101), and
the communication apparatus (101) that receives the information on the external access point (102) transmitted by executing the third processing is a second communication apparatus (101).

10. The method according to any one of claims 1 to 9, wherein the information held by the predetermined application program (203) is a list of communication apparatuses (101) selectable by the predetermined application program (203),
the communication apparatus (101) selected in the list is switched by accepting a predetermined operation by the predetermined application program (203), and
the communication apparatus (101) selected in the list is displayed by the predetermined application program (203).

11. The method according to any one of claims 1 to 10, wherein the information on the external access point (102) is transmitted to the communication apparatus (101) by executing the third processing, and then the communication apparatus (101) is searched via the external access point (102), and
in a case that the communication apparatus (101) is detected via the external access point (102), a first screen based on the detection of the communication apparatus (101) via the external access point (102) is displayed, and in a case that the communication apparatus (101) is not detected via the external access point (102), a second screen based on no detection of the communication apparatus (101) via the external access point (102) is displayed.

12. The method according to claim 11, wherein the information on the external access point (102) is transmitted by connection not passing through the external access point (102) between the communication apparatus (101) and the information processing apparatus (100),
after the information on the external access point (102) is transmitted, the connection between the information processing apparatus (100) and the external access point (102) is established, and
after the connection between the information processing apparatus (100) and the external access point (102) is established, the communication apparatus (101) is searched via the external access point (102).

13. The method according to any one of claims 1 to 12, wherein the communication apparatus (101) corresponding to the information registered as the information held by the predetermined application program (203) is instructed to print.

14. An information processing apparatus (100) comprising:
a first execution means configured to execute first processing for transmitting information on an external access point (102) to a communication apparatus (101) based on a predetermined user operation to a screen displayed by a predetermined application program (203) based on the predetermined application program (203) being activated;
a second execution means configured to execute second processing of registering, as information held by the predetermined application program (203), information representing the communication apparatus (101) which has served as a transmission destination of the information on the external access point (102) after the first processing is executed; and
a third execution means configured to execute third processing for transmitting the information on the external access point (102) to the communication apparatus (101) based on activation of the predetermined application program (203) and without accepting the predetermined user operation in a case that the predetermined application program (203) is activated in a state in which the information representing any one communication apparatus (101) is registered as information held by the predetermined application program (203) by executing the second processing.

15. A computer program comprising instructions which, when the program is executed by an information processing apparatus (100), cause the information processing apparatus (100) to carry out the method according to any one of claims 1 to 14.
